# EUROPEAN PATENT APPLICATION

(11) **EP 3 780 157 A1**
(43) Date of publication of application: **17.02.2021**
(21) Application number: 19774365.1
(22) Date of filing: 19.03.2019
(51) Int. Cl.: H01M 4/02, H01G 11/28, H01M 4/62, H01M 4/66

(54) **ENERGY STORAGE DEVICE ELECTRODE AND ENERGY STORAGE DEVICE**

(30) Priority: 29.03.2018 JP 2018064076
(71) Applicant: Nissan Chemical Corporation, Tokyo 103-6119 (JP)
(72) Inventor: HATANAKA, Tatsuya, Funabashi-shi, Chiba 274-0052 (JP); YAJIMA, Mari, Funabashi-shi, Chiba 274-0052 (JP); SAKAIDA, Yasushi, Funabashi-shi, Chiba 274-0052 (JP)
(74) Representative: Mewburn Ellis LLP
(86) International application number: PCT/JP2019/011364
(87) International publication number: WO 2019/188558

(57) **Abstract**

Provided is an energy storage device electrode provided with: a current collector; an undercoat layer which includes a conductive carbon material and a cationic dispersant and is formed on at least one surface of said current collector; and an electrode mixture layer formed on said undercoat layer.

## Description

### TECHNICAL FIELD

The present invention relates to an electrode for an energy storage device and to an energy storage device.

### BACKGROUND ART

In recent years, with the growing use of energy storage devices such as lithium-ion secondary batteries and electrical double-layer capacitors, there exists a desire for a lower internal resistance in such devices. One method for addressing this desire has been to place a conductive carbon material-containing undercoat layer between the electrode mixture layer and the current collector, thereby lowering the resistance at the contact interface therebetween (see, for example, Patent Documents 1 and 2). However, when the undercoat layer has a large weight per unit surface area (coating weight), a drawback is that the battery becomes heavier and larger in size.

The undercoat layer is also counted on to increase adhesion between the electrode mixture layer and the current collector and thereby suppress degradation due to interfacial separation. As solids (powders), conductive carbon materials have weak interactions with the current collector and the electrode layer. In order for the undercoat layer to strongly adhere to the current collector and the electrode layer, it must therefore include an ingredient other than a conductive carbon material that has a high bond strength. Yet, as the content of ingredients other than conductive carbon material becomes higher, the level of electrically insulating ingredients rises, resulting in a decrease in the electrical conductivity of the undercoat layer and compromising the battery resistance-lowering effect. For this reason, the conductive carbon material dispersant itself is expected to have a high adhesion with the current collector and the electrode mixture layer.

Cationic polymers exhibit a high bond strength owing to strong electrostatic interactions with anionic polymers. Patent Document 3 reports examples in which cationic polymers are used as dispersants for carbon nanotubes, but a diallylamine-based cationic polymer, an anionic surfactant and a nonionic surfactant must be used together. Also, a dispersant having a cationic amine head is used in Patent Document 4. But this is a zwitterion and, moreover, a second polymer ingredient is required in order to disperse carbon nanotubes. In these examples, the amount of electrically insulating ingredient increases, hindering manifestation of the conductivity expected of the conductive carbon material. Also, the presence of a cationic ingredient and an anionic ingredient within the composition results in a neutralized state, and so strong electrostatic interactions with another material that is anionic cannot be expected.

### PRIOR ART DOCUMENTS

### PATENT DOCUMENTS

Patent Document 1: JP-A 2010-170965
Patent Document 2: WO 2014/042080
Patent Document 3: JP No. 5403738
Patent Document 4: JP No. 5328150

### SUMMARY OF INVENTION

### TECHNICAL PROBLEM

The present invention was arrived at in light of the above circumstances. An object of the invention is to provide an energy storage device electrode having an undercoat layer which can achieve a high adhesion with the electrode mixture layer and the current collector.

### SOLUTION TO PROBLEM

The inventors have conducted extensive investigations aimed at achieving the above object. As a result, they have discovered that the above problem can be resolved by using a cationic polymer as the dispersant for the conductive carbon material included in the undercoat layer. This discovery ultimately led to the present invention.

Accordingly, the invention provides the following energy storage device electrode and energy storage device.
1. An energy storage device electrode which includes a current collector, a conductive carbon material and cationic dispersant-containing undercoat layer formed on at least one side of the current collector, and an electrode mixture layer formed on the undercoat layer.
2. The energy storage device electrode of 1 above, wherein the conductive carbon material includes carbon nanotubes.
3. The energy storage device electrode of 1 or 2 above, wherein the electrode mixture layer includes a compound having an anionic functional group.
4. The energy storage device electrode of any of 1 to 3 above, wherein the cationic dispersant includes at least one selected from the group consisting of cationic polymers obtained using dicyandiamide as the monomer, cationic polymers obtained using diethylenetriamine as the monomer, cationic polymers obtained using dicyandiamide and diethylenetriamine as the monomers, and cationic polymers obtained using ethyleneimine as the monomer.
5. The energy storage device electrode of 4 above, wherein the cationic dispersant is a cationic polymer obtained using ethyleneimine as the monomer.
6. The energy storage device electrode of 4 above, wherein the cationic dispersant is a cationic polymer obtained using dicyandiamide as the monomer.
7. The energy storage device electrode of 4 above, wherein the cationic dispersant is a cationic polymer obtained using diethylenetriamine as the monomer.
8. The energy storage device electrode of 4 above, wherein the cationic dispersant is a cationic polymer obtained using dicyandiamide and diethylenetriamine as the monomers.
9. The energy storage device electrode of any of 1 to 8 above, wherein the coating weight of the undercoat layer per side of the current collector is 1,000 mg/m² or less.
10. The energy storage device electrode of 9 above, wherein the coating weight of the undercoat layer per side of the current collector is 500 mg/m² or less.
11. The energy storage device electrode of 10 above, wherein the coating weight of the undercoat layer per side of the current collector is 300 mg/m² or less.
12. The energy storage device electrode of any of 1 to 11 above, wherein the current collector is copper foil or aluminum foil.
13. An energy storage device which includes the energy storage device electrode of any of 1 to 12 above.

### ADVANTAGEOUS EFFECTS OF INVENTION

The energy storage device electrode of the invention has an excellent adhesion between the current collector and the electrode mixture layer, and can thus suppress battery degradation due to interfacial separation.

### BRIEF DESCRIPTION OF DRAWINGS

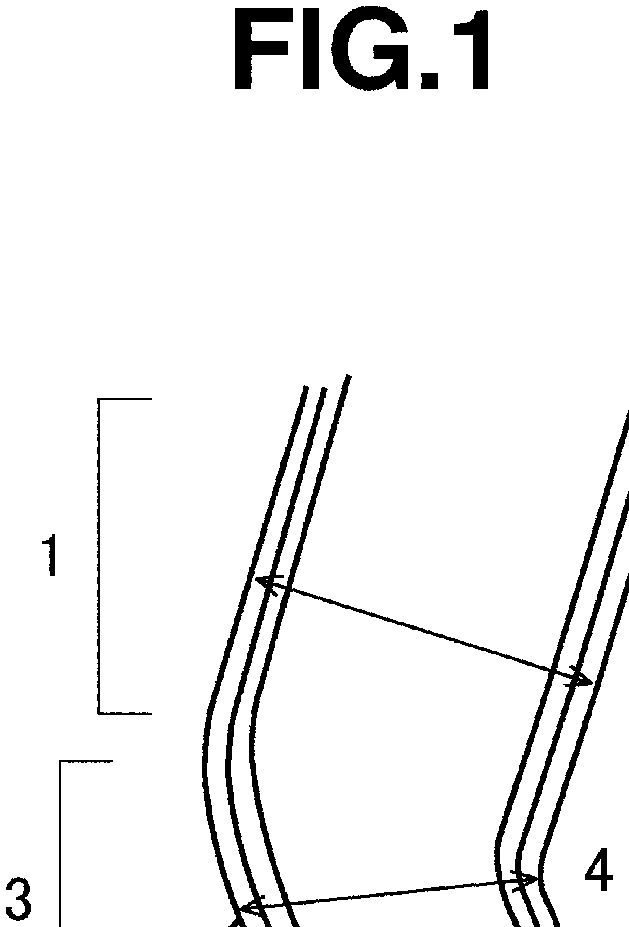

[FIG. 1] FIG. 1 is a schematic cross-sectional diagram of a carbon nanotube having constricted areas, such as may be used in this invention.

### DESCRIPTION OF EMBODIMENTS

### [Energy Storage Device Electrode]

The energy storage device electrode of the invention includes a current collector, a conductive carbon material and cationic dispersant-containing undercoat layer formed on at least one side of the current collector, and an electrode mixture layer formed on the undercoat layer.

### [Current Collector]

The current collector may be one that has hitherto been used as a current collector in energy storage device electrodes. For example, copper, aluminum, titanium, stainless steel, nickel, gold, silver and alloys of these, as well as carbon materials, metal oxides and electrically conductive polymers may be used. In cases where the electrode structure is fabricated by the application of welding such as ultrasonic welding, the use of metal foil made of copper, aluminum, titanium, stainless steel or an alloy thereof is preferred. The thickness of the current collector is not particularly limited, although a thickness of from 1 to 100 µm is preferred in this invention.

### [Undercoat Layer]

The undercoat layer includes a conductive carbon material as an electrically conductive material. The conductive carbon material which is used may be one that is suitably selected from among known carbon materials such as carbon black, ketjen black, acetylene black, carbon whiskers, carbon nanotubes (CNTs), carbon fibers, natural graphite and synthetic graphite. In this invention, the use in particular of a conductive carbon material containing carbon black and/or CNTs is preferred, and the use of a conductive carbon material consisting solely of carbon black or consisting solely of CNTs is more preferred.

Carbon nanotubes are generally produced by an arc discharge process, chemical vapor deposition (CVD), laser ablation or the like. The CNTs used in this invention may be obtained by any of these methods. CNTs are categorized as single-walled CNTs (SWCNTs) consisting of a single cylindrically rolled graphene sheet, double-walled CNTs (DWCNTs) consisting of two concentrically rolled graphene sheets, and multi-walled CNTs (MWCNTs) consisting of a plurality of concentrically rolled graphene sheets. SWCNTs, DWCNTs or MWCNTs may be used alone in the invention, or a plurality of these types of CNTs may be used in combination. From the standpoint of cost, multi-walled CNTs having a diameter of at least 2 nm in particular are preferred; from the standpoint of the ability to form a thinner film, multi-walled CNTs having a diameter of not more than 500 nm in particular are preferred, multi-walled CNTs having a diameter of not more than 100 nm are more preferred, multi-walled CNTs have a diameter of not more than 50 nm are even more preferred, and multi-walled CNT's having a diameter of not more than 30 nm are most preferred. The diameter of the CNTs can be measured by using a transmission electron microscope to examine a thin film obtained by drying a dispersion of the CNTs dispersed in a solvent.

When SWCNTs, DWCNTs or MWCNTs are produced by the above methods, catalyst metals such as nickel, iron, cobalt and yttrium may remain in the product, and so purification to remove these impurities is sometimes necessary. Acid treatment with nitric acid, sulfuric acid or the like together with sonication is effective for removing impurities. However, in acid treatment with nitric acid, sulfuric acid or the like, there is a possibility of the π-conjugated system making up the CNTs being destroyed and properties inherent to the CNTs being lost. Hence, it is desirable for the CNTs to be purified and used under suitable conditions.

In order to exhibit a battery resistance-lowering effect when the dispersion is applied as a film and formed into an undercoat layer, it is preferable for the CNTs to be ones that easily disperse within the dispersion. Such CNTs are preferably ones having numerous crystal discontinuities that readily break under a small energy. From this standpoint, the CNTs used in the inventive composition are preferably ones having constricted areas. As used herein, a "CNT having constricted areas" refers to a carbon nanotube having constricted areas where the diameter of the tube is 90% or less of the tube diameter across parallel areas of the CNT. Because such a constricted area is a site created when the CNT direction of growth changes, it has a crystalline discontinuity and is a breakable place that can be easily cut with a small mechanical energy.

FIG. 1 shows a schematic cross-sectional diagram of a CNT having parallel areas 1 and constricted areas 3. A parallel area 1, as shown in FIG. 1, is a portion where the walls can be recognized as two parallel straight lines or two parallel curved lines. At this parallel area 1, the distance between the outer walls of the tube in the direction normal to the parallel lines is the tube outer diameter 2 for the parallel area 1. A constricted area 3 is a portion which is continuous at both ends with parallel areas 1 and where the distance between the walls is closer than in the parallel area 1. More specifically, it is an area having a tube outer diameter 4 which is 90% or less of the tube outer diameter 2 at parallel areas 1. The tube outer diameter 4 at a constricted area 3 is the distance between the outer walls of the tube at the place where the outer walls are closest together. As shown in FIG. 1, places where the crystal is discontinuous exist at most of the constricted areas 3.

The wall shape and tube outer diameter of the CNTs can be observed with a transmission electron microscope or the like. Specifically, the constricted areas can be confirmed from the image obtained by preparing a 0.5% dispersion of the CNTs, placing the dispersion on a microscope stage and drying it, and then photographing the dried dispersion at a magnification of 50,000× with a transmission electron microscope.

When a 0.1% dispersion of the CNTs is prepared, the dispersion is placed on a microscope stage and dried, an image of the dried dispersion captured at 20,000× with a transmission electron microscope is divided into 100 nm square sections and 300 of the sections in which the CNTs occupy from 10 to 80% of the 100 nm square section are selected, and the proportion of all such sections which have breakable places (proportion having breakable places present) is determined as the proportion of the 300 sections which have at least one constricted area present within the section. In cases where the surface area occupied by the CNTs in a section is 10% or less, measurement is difficult because the amount of CNTs present is too low. On the other hand, when the surface area occupied by the CNTs in a section is 80% or more, the CNTs are numerous and end up overlapping, as a result of which it is difficult to distinguish between parallel areas and constricted areas, making precise measurement a challenge.

In the CNTs used in this invention, the proportion having breakable places present is 60% or more. When the proportion having breakable places present is lower than 60%, the CNTs are difficult to disperse; applying excessive mechanical energy to effect dispersion leads to destruction of the crystalline structure of the graphite-net plane, lowering the properties such as electrical conductivity that are characteristic of CNTs. To obtain a higher dispersibility, the proportion having breakable places present is preferably 70% or more.

Specific examples of CNTs that may be used in this invention include the following CNTs having a constricted structure that are disclosed in WO 2016/076393 and JP-A 2017-206413: the TC series such as TC-2010, TC-2020, TC-3210L and TC-1210LN (Toda Kogyo Corporation), CNTs synthesized by the super growth method (available from the New Energy and Industrial Technology Development Organization (NEDO) in the National Research and Development Agency), eDIPS-CNTs (available from NEDO in the National Research and Development Agency), the SWNT series (available under this trade name from Meijo Nano Carbon), the VGCF series (available under this trade name from Showa Denko KK), the FloTube series (available under this trade name from CNano Technology), AMC (available under this trade name from Ube Industries, Ltd.), the NANOCYL NC7000 series (available under this trade name from Nanocyl S.A.), Baytubes (available under this trade name from Bayer), GRAPHISTRENGTH (available under this trade name from Arkema), MWNT7 (available under this trade name from Hodogaya Chemical Co., Ltd.) and Hyperion CNT (available under this trade name from Hyperion Catalysis International).

The undercoat layer includes a cationic dispersant as the conductive carbon material dispersant. The cationic dispersant that is used may be suitably selected from among known cationic polymers and is preferably one having no anionic functional groups. In this invention, "having no anionic functional groups" means to have no anionic functional groups on the molecule--i.e., to be unable to assume a zwitterionic structure, and includes the form of salts of a cation on the cationic dispersant with a counteranion (e.g., an amine hydrochloride).

On account of their better conductive material dispersibilities, the cationic dispersant preferably includes one or more selected from the following group: cationic polymers synthesized using dicyandiamide as the monomer, cationic polymers synthesized using diethylenetriamine as the monomer, cationic polymers synthesized using dicyandiamide and diethylenetriamine as the monomers, and cationic polymers synthesized using an ethyleneimine as the monomer. The cationic dispersant more preferably includes one or more selected from the group consisting of cationic polymers synthesized using dicyandiamide and diethylenetriamine as the monomers and cationic polymers synthesized using ethyleneimine as the monomer. The cationic dispersant even more preferably includes one or more selected from polyethyleneimines which are cationic polymers synthesized using a dicyandiamide-diethylenetriamine condensate and ethyleneimine as the monomers. The cationic polymer may be a copolymer which includes also monomer constituents other than the above monomer constituents.

These cationic polymers may be ones which are obtained by a known method of synthesis, or commercial products may be used. Illustrative examples of such commercial products include the Unisence series from Senka Corporation; and Epomin® (polyethyleneimine) SP-003, SP-006, SP-012, SP-018, SP-020 and P-1000, as well as Polyment® (aminoethylated acrylic polymer) NK-100PM, NM-200PM, NK-350 and NK-380, all from Nippon Shokubai Co., Ltd. In the Unisence series, suitable use can be made of Unisence KHP10P (a hydrochloride of a dicyandiamide-diethylenetriamine condensate).

The undercoat layer is preferably created using an undercoat composition which includes the above-described conductive carbon material and cationic dispersant and also a solvent.

The solvent is not particularly limited, so long as it is one that has hitherto been used in preparing conductive compositions. Illustrative examples include water and the following organic solvents: ethers such as tetrahydrofuran (THF), diethyl ether and 1,2-dimethoxyethane (DME); halogenated hydrocarbons such as methylene chloride, chloroform and 1,2-dichloroethane; amides such as N,N-dimethylformamide (DMF), N,N-dimethylacetamide (DMAc) and N-methyl-2-pyrrolidone (NMP); ketones such as acetone, methyl ethyl ketone, methyl isobutyl ketone and cyclohexanone; alcohols such as methanol, ethanol, n-propanol, isopropanol, n-butanol and tert-butanol; aliphatic hydrocarbons such as n-heptane, n-hexane and cyclohexane; aromatic hydrocarbons such as benzene, toluene, xylene and ethylbenzene; glycol ethers such as ethylene glycol monoethyl ether, ethylene glycol monobutyl ether and propylene glycol monomethyl ether; and glycols such as ethylene glycol and propylene glycol. One of these solvents may be used alone, or two or more may be used in admixture. In particular, to increase the proportion of CNTs that are individually dispersed, it is preferable to include water, NMP, DMF, THF, methanol, ethanol, n-propanol, isopropanol, n-butanol or tert-butanol. To improve the coatability, it is preferable to include methanol, ethanol, n-propanol, isopropanol, n-butanol or tert-butanol. To lower costs, it is preferable to include water. For the purpose of increasing the proportion of CNTs that are individually dispersed, improving the coatability and lowering costs, these solvents may be used alone or two or more may be used in admixture. When a mixed solvent of water and an alcohol is used, the mixing ratio is not particularly limited, although it is preferable for the weight ratio (water : alcohol) to be from about 1:1 to about 10:1.

The undercoat composition may optionally include a matrix polymer. The matrix polymer is preferably one having no anionic functional groups. Illustrative examples of matrix polymers include the following thermoplastic resins: fluoropolymers such as polyvinylidene fluoride (PVDF), polytetrafluoroethylene (PTFE), tetrafluoroethylene-hexafluoropropylene copolymers (P(TFE-HFP)), vinylidene fluoride-hexafluoropropylene copolymers (P(VDF-HFP)) and vinylidene fluoride-chlorotrifluoroethylene copolymers (P(VDF-CTFE)); polyolefin resins such as polyvinylpyrrolidone, ethylene-propylene-diene ternary copolymers, polyethylene (PE), polypropylene (PP), ethylene-vinyl acetate copolymers (EVA) and ethylene-ethyl acrylate copolymers (EEA); polystyrene resins such as polystyrene (PS), high-impact polystyrene (HIPS), acrylonitrile-styrene copolymers (AS), acrylonitrile-butadiene-styrene copolymers (ABS), methyl methacrylate-styrene copolymers (MS) and styrene-butadiene rubbers; polycarbonate resins, vinyl chloride resins, polyamide resins, polyimide resins, (meth)acrylic resins such as polymethyl methacrylate (PMMA); polyester resins such as polyethylene terephthalate (PET), polybutylene terephthalate, polyethylene naphthalate, polybutylene naphthalate, polylactic acid (PLA), poly-3-hydroxybutyric acid, polycaprolactone, polybutylene succinate and polyethylene succinate/adipate; polyphenylene ether resins, modified polyphenylene ether resins, polyacetal resins, polysulfone resins, polyphenylene sulfide resins, polyvinyl alcohol resins, polyglycolic acids, modified starches, cellulose acetate, carboxymethylcellulose, cellulose triacetate; chitin, chitosan and lignin; the following electrically conductive polymers: polyaniline and emeraldine base (the semi-oxidized form of polyaniline), polythiophene, polypyrrole, polyphenylene vinylene, polyphenylene and polyacetylene; and the following thermoset or photocurable resins: epoxy resins, urethane acrylate, phenolic resins, melamine resins, urea resins and alkyd resins. Because it is desirable to use water as the solvent in the undercoat composition, the matrix polymer is preferably a water-soluble polymer such as water-soluble cellulose ether, polyvinyl alcohol or polyethylene glycol.

The matrix polymer may be acquired as a commercial product. Illustrative examples of such commercial products include the Metolose® SH Series (hydroxypropylmethyl cellulose, from Shin-Etsu Chemical Co., Ltd.), the Metolose® SE Series (hydroxyethylmethyl cellulose, from Shin-Etsu Chemical Co., Ltd.), JC-25 (a fully saponified polyvinyl alcohol, from Japan Vam & Poval Co., Ltd.), JM-17 (an intermediately saponified polyvinyl alcohol, from Japan Vam & Poval Co., Ltd.) and JP-03 (a partially saponified polyvinyl alcohol, from Japan Vam & Poval Co., Ltd.).

The matrix polymer content, although not particularly limited, is preferably set to from about 0.0001 to about 99 wt%, and more preferably from about 0.001 to about 90 wt%, of the composition.

In this invention, the mixing ratio between the conductive carbon material such as CNTs and the cationic dispersant is not particularly limited; expressed as a weight ratio, it is preferably from about 1,000:1 to about 1:100. The concentration of dispersant in the composition is not particularly limited, provided that it is a concentration which enables the conductive carbon material such as CNTs to disperse in the solvent. However, the concentration in the composition is preferably from about 0.001 wt% to about 30 wt%, and more preferably from about 0.002 wt% to about 20 wt%.

The concentration of conductive carbon material such as CNTs in the composition varies according to the coating weight of the target conductive thin film (undercoat layer) and the required mechanical, electrical and thermal characteristics, and may be any concentration at which, in cases where CNTs are used, at least a portion thereof are able to individually disperse. The concentration in the composition is preferably set to from about 0.0001 wt% to about 30 wt%, more preferably from about 0.001 wt% to about 20 wt%, and even more preferably from about 0.001 wt% to about 10 wt%.

The undercoat composition may include a crosslinking agent. The crosslinking agent is preferably one without anionic functional groups and preferably dissolves in the solvent used.

The crosslinking agent is exemplified by any of the following which are capable of reacting with amino groups: ketones, alkyl halides, acryloyls, epoxy compounds, cyanamides, ureas, acids, acid anhydrides, acyl halides, and compounds having a functional group such as a thioisocyanate group, isocyanate group or aldehyde group; and by compounds having like crosslinkable functional groups which react with one another, such as hydroxyl groups (dehydration condensation), mercato groups (disulfide bonding), ester groups (Claisen condensation), silanol groups (dehydration condensation), vinyl groups and acrylic groups. Specific examples of crosslinking agents include any of the following which exhibit crosslink reactivity in the presence of an acid catalyst: polyfunctional acrylates, tetraalkoxysilanes, and monomers or polymers having a blocked isocyanate group.

Such crosslinking agents may be acquired as commercial products. Examples of commercial products include polyfunctional acrylates such as A-9300 (ethoxylated isocyanuric acid triacrylate, from Shin-Nakamura Chemical Co., Ltd.), A-GLY-9E (ethoxylated glycerine triacrylate (EO 9 mol), from Shin-Nakamura Chemical Co., Ltd.) and A-TMMT (pentaerythritol tetraacrylate, from Shin-Nakamura Chemical Co., Ltd.); tetraalkoxysilanes such as tetramethoxysilane (Tokyo Chemical Industry Co., Ltd.) and tetraethoxysilane (Toyoko Kagaku Co., Ltd.); and blocked isocyanate group-containing polymers such as the Elastron® Series E-37, H-3, H38, BAP, NEW BAP-15, C-52, F-29, W-11P, MF-9 and MF-25K (DKS Co., Ltd.).

The amount in which these crosslinking agents is added varies according to, for example, the solvent used, the substrate used, the viscosity required and the film shape required, but is generally from 0.001 to 80 wt%, preferably from 0.01 to 50 wt%, and more preferably from 0.05 to 40 wt%, based on the cationic dispersant.

The method of preparing the undercoat composition is not particularly limited. For example, preparation may be carried out by mixing together in any order the conductive carbon material and the solvent, and also the dispersant, matrix polymer and crosslinking agent which may be used if necessary.

The mixture is preferably dispersion treated at this time. Such treatment enables the proportion of the conductive carbon material that is dispersed to be further increased. Examples of dispersion treatment include mechanical treatment in the form of wet treatment using, for example, a ball mill, bead mill or jet mill, or in the form of sonication using a bath-type or probe-type sonicator. Of these, wet treatment using a jet mill and sonication are especially preferred.

The dispersion treatment may be carried out for any length of time, although a period of from about 1 minute to about 10 hours is preferred, and a period of from about 5 minutes to about 5 hours is even more preferred. If necessary, heat treatment may be carried out at this time. When a crosslinking agent and/or a matrix polymer are used, these may be added after preparing a mixture of the dispersant, the conductive carbon material and the solvent.

An undercoat foil (composite current collector) can be produced by applying the undercoat composition to at least one side of the current collector, and then drying the applied composition in air or under heating to form an undercoat layer.

The undercoat layer has a thickness which, in order to reduce the internal resistance of the resulting device, is preferably from 1 nm to 10 µm, more preferably from 1 nm to 1 µm, and even more preferably from 1 to 500 nm. The thickness of the undercoat layer can be determined by, for example, cutting out a test specimen of a suitable size from the undercoat foil, exposing the foil cross-section by such means as tearing the specimen by hand, and using a scanning electron microscope (SEM) or the like to microscopically examine the cross-sectional region where the undercoat layer lies exposed.

The coating weight of the undercoat layer per side of the current collector is not particularly limited, so long as the above-indicated film thickness is satisfied, but is preferably 1,000 mg/m² or less, more preferably 500 mg/m² or less, and even more preferably 300 mg/m² or less. To ensure the intended functions of the undercoat layer and to reproducibly obtain batteries having excellent characteristics, the coating weight of the undercoat layer per side of the current collector is set to preferably 1 mg/m² or more, more preferably 5 mg/m² or more, even more preferably 10 mg/m² or more, and still more preferably 15 mg/m² or more.

The coating weight of the undercoat layer in this invention is the ratio of the undercoat layer weight (mg) to the undercoat layer surface area (m²). In cases where the undercoat layer is formed into a pattern, this surface area is the surface area of the undercoat layer alone and does not include the surface area of exposed current collector between the undercoat layer that has been formed into a pattern.

The weight of the undercoat layer can be determined by, for example, cutting out a test specimen of a suitable size from the undercoat foil and measuring its weight W⁰, stripping the undercoat layer from the undercoat foil and measuring the weight W¹ after the undercoat layer has been stripped off, and calculating the difference therebetween (W⁰ - W¹). Alternatively, the weight of the undercoat layer can be determined by first measuring the weight W² of the current collector, subsequently measuring the weight W³ of the undercoat foil on which the undercoat layer has been formed, and calculating the difference therebetween (W³ - W²).

The method used to strip off the undercoat layer may involve, for example, immersing the undercoat layer in a solvent which dissolves the undercoat layer or causes it to swell, and then wiping off the undercoat layer with a cloth or the like.

The coating weight can be adjusted by a known method. For example, in cases where the undercoat layer is formed by coating, the coating weight can be adjusted by varying the solids concentration of the coating liquid for forming the undercoat layer (undercoat composition), the number of coating passes or the clearance of the coating liquid delivery opening in the coater. When one wishes to increase the coating weight, this is done by making the solids concentration higher, increasing the number of coating passes or making the clearance larger. When one wishes to lower the coating weight, this is done by making the solids concentration lower, reducing the number of coating passes or making the clearance smaller.

Coating methods for the undercoat composition include spin coating, dip coating, flow coating, inkjet coating, casting, spray coating, bar coating, gravure coating, slit coating, roll coating, flexographic printing, transfer printing, brush coating, blade coating and air knife coating. Of these, from the standpoint of work efficiency and other considerations, inkjet coating, casting, dip coating, bar coating, blade coating, roll coating, gravure coating, flexographic printing and spray coating are preferred.

The temperature when drying under applied heat, although not particularly limited, is preferably from about 50°C to about 200°C, and more preferably from about 80°C to about 150°C.

### [Electrode Mixture Layer]

The electrode mixture layer can be formed by applying onto the undercoat layer an electrode slurry containing an active material, a binder polymer and, optionally, a solvent, and then drying the applied slurry in air or under heating.

Any of the various types of active materials that have hitherto been used in energy storage device electrodes may be used as the active material. For example, in the case of lithium secondary batteries and lithium-ion secondary batteries, chalcogen compounds capable of adsorbing and releasing lithium ions, lithium ion-containing chalcogen compounds, polyanion compounds, elemental sulfur and sulfur compounds may be used as the positive electrode active material.

Illustrative examples of such chalcogen compounds capable of adsorbing and releasing lithium ions include FeS₂, TiS₂, MoS₂, V₂O₆, V₆O₁₃ and MnO₂.

Illustrative examples of lithium ion-containing chalcogen compounds include LiCoO₂, LiMnO₂, LiMn₂O4, LiMo₂O₄, LiV₃O₈, LiNiO₂ and LiₓNi_{y}M_{1-y}O₂ (wherein M is one or more metal element selected from cobalt, manganese, titanium, chromium, vanadium, aluminum, tin, lead and zinc; and the conditions 0.05 ≤ x ≤ 1.10 and 0.5 ≤ y ≤ 1.0 are satisfied).

An example of a polyanion compound is lithium iron phosphate (LiFePO₄). Illustrative examples of sulfur compounds include Li₂S and rubeanic acid.

The following may be used as the active material in the negative electrode: alkali metals, alkali metal alloys, at least one elemental substance selected from among Group 4 to 15 elements of the periodic table which intercalate and deintercalate lithium ions, as well as oxides, sulfides and nitrides thereof, and carbon materials which are capable of reversibly intercalating and deintercalating lithium ions.

Illustrative examples of the alkali metals include lithium, sodium and potassium. Illustrative examples of the alkali metal alloys include Li-Al, Li-Mg, Li-Al-Ni, Na-Hg and Na-Zn.

Illustrative examples of the at least one elemental substance selected from among Group 4 to 15 elements of the periodic table which intercalate and deintercalate lithium ions include silicon, tin, aluminum, zinc and arsenic. Illustrative examples of the oxides include tin silicon oxide (SnSiO₃), lithium bismuth oxide (Li₃BiO₄), lithium zinc oxide (Li₂ZnO₂), lithium titanium oxide (Li₄Ti₅O₁₂) and titanium oxide. Illustrative examples of the sulfides include lithium iron sulfides (LiₓFeS₂ (0 ≤ x ≤ 3)) and lithium copper sulfides (LiₓCuS (0 ≤ x ≤ 3)). Exemplary nitrides include lithium-containing transition metal nitrides, illustrative examples of which include LiₓM_{y}N (wherein M is cobalt, nickel or copper; 0 ≤ x ≤ 3, and 0 ≤ y ≤ 0.5) and lithium iron nitride (Li₃FeN₄).

Examples of carbon materials which are capable of reversibly intercalating and deintercalating lithium ions include graphite, carbon black, coke, glassy carbon, carbon fibers, carbon nanotubes, and sintered compacts of these.

In the case of electrical double-layer capacitors, a carbonaceous material may be used as the active material. The carbonaceous material is exemplified by activated carbon, such as activated carbon obtained by carbonizing a phenolic resin and then subjecting the carbonized resin to activation treatment.

A known material may be suitably selected and used as the binder polymer. Illustrative examples include fluorine atom-containing polymers such as PVDF, PTFE P(TFE-HFP), P(VDF-HFP) and P(VDF-CTFE), polyvinylpyrrolidone, polyvinyl alcohols, polyimides, polyamideimides, ethylene-propylene-diene ternary copolymers, styrene-butadiene rubbers, CMC, polyacrylic acid (PAA), organic salts and metal salts of polyacrylic acid, anionic functional group-containing polymers such as polyamic acid, and electrically conductive polymers such as polyaniline. Of these, fluorine atom-containing polymers and anionic functional group-containing polymers are preferred because the bond strength between the current collector and the electrode mixture layer is excellent.

The amount of binder polymer added per 100 parts by weight of the active material is preferably from 0.1 to 20 parts by weight, and more preferably from 1 to 10 parts by weight.

The solvent is exemplified by the solvents mentioned above in connection with the undercoat composition. The solvent may be suitably selected from among these according to the type of binder, although NMP is preferred in the case of water-insoluble binders such as PVDF, and water is preferred in the case of water-soluble binders such as PAA.

The electrode slurry may also contain a conductive material. Illustrative examples of conductive materials include carbon black, carbon nanotubes, ketjen black, acetylene black, carbon whiskers, carbon fibers, natural graphite, synthetic graphite, titanium oxide, ruthenium oxide, aluminum and nickel.

The method of applying the electrode slurry is exemplified by methods similar to those for applying the undercoat composition. The temperature when drying the applied electrode slurry under applied heat, although not particularly limited, is preferably from about 50°C to about 400°C, and more preferably from about 80°C to about 150°C.

The region where the electrode mixture layer is formed should be suitably set according to such considerations as the cell configuration of the device used and may be either the entire surface of the undercoat layer or a portion thereof. For example, for use in a laminate cell as an electrode assembly in which metal tabs and electrodes are bonded together by welding such as ultrasonic welding, it is preferable to form the electrode mixture layer by applying the electrode slurry to part of the undercoat layer surface in order to leave a welding region. In laminate cell applications in particular, it is preferable to form the electrode mixture layer by applying the electrode slurry to areas of the undercoat layer other than the periphery thereof.

The electrode mixture layer has a thickness which, taking into account the balance between battery capacity and resistance, is preferably from 10 to 500 µm, more preferably from 10 to 300 µm, and even more preferably from 20 to 100 µm.

The electrode mixture layer preferably includes an anionic functional group-containing compound. In this case, for example, the binder polymer may be the anionic functional group-containing compound, or the conductive material may be the anionic functional group-containing compound. Anionic functional group-containing binder polymers are exemplified by those mentioned above. Examples of anionic functional group-containing conductive materials include those wherein numerous acidic functional groups are retained on the surface by synthesis in an oxygen-containing atmosphere, those wherein acidic functional groups are introduced onto the surface by chemical oxidation treatment, thermal oxidation treatment or the like, and those obtained by the formation of a composite with an anionic surfactant or an anionic dispersant.

If necessary, the electrode may be pressed. The pressing force at this time is preferably at least 1 kN/cm. A commonly employed method may be used as the pressing method, although a die pressing method or a roll pressing method is especially preferred. The pressing force, although not particularly limited, is preferably at least 2 kN/cm, and more preferably at least 3 kN/cm. The pressing force upper limit is preferably about 40 kN/cm, and more preferably about 30 kN/cm.

### [Energy Storage Device]

The energy storage device of the invention includes therein the above-described energy storage device electrode. More specifically, it is constructed of at least a pair of positive and negative electrodes, a separator interposed between these electrodes, and an electrolyte, with at least the positive electrode or the negative electrode being composed of the above-described energy storage device electrode.

The energy storage device of the invention is exemplified by various types of energy storage devices, including lithium-ion secondary batteries, hybrid capacitors, lithium secondary batteries, nickel-hydrogen batteries and lead storage batteries.

This energy storage device is characterized by the use, as an electrode therein, of the above-described energy storage device electrode. Accordingly, other constituent members of the device such as the separator and the electrolyte may be suitably selected from known materials.

Illustrative examples of the separator include cellulose-based separators and polyolefin-based separators. The electrolyte may be either a liquid or a solid, and moreover may be either aqueous or non-aqueous. The energy storage device electrode of the invention is capable of exhibiting a performance sufficient for practical purposes even when employed in devices that use a non-aqueous electrolyte.

The non-aqueous electrolyte is exemplified by non-aqueous electrolyte solutions obtained by dissolving an electrolyte salt in a non-aqueous organic solvent. Examples of the electrolyte salt include lithium salts such as lithium tetrafluoroborate, lithium hexafluorophosphate, lithium perchlorate and lithium trifluoromethanesulfonate; quaternary ammonium salts such as tetramethylammonium hexafluorophosphate, tetraethylammonium hexafluorophosphate, tetrapropylammonium hexafluorophosphate, methyltriethylammonium hexafluorophosphate, tetraethylammonium tetrafluoroborate and tetraethylammonium perchlorate; and lithium imides such as lithium bis(trifluoromethanesulfonyl)imide and lithium bis(fluorosulfonyl)imide.

Examples of the non-aqueous organic solvent include alkylene carbonates such as propylene carbonate, ethylene carbonate and butylene carbonate; dialkyl carbonates such as dimethyl carbonate, methyl ethyl carbonate and diethyl carbonate; nitriles such as acetonitrile; and amides such as dimethylformamide.

The configuration of the energy storage device is not particularly limited. Cells of various known configurations, such as cylindrical cells, flat wound prismatic cells, stacked prismatic cells, coin cells, flat wound laminate cells and stacked laminate cells, may be used.

When used in a coil cell, the above-described energy storage device electrode of the invention may be die-cut in a specific disk shape and used. For example, a lithium-ion secondary battery may be produced by setting a given number of pieces of lithium foil die-cut to a given shape on a coin cell cap to which a washer and a spacer have been welded, laying an electrolyte solution-impregnated separator of the same shape on top thereof, stacking the energy storage device electrode of the invention on top of the separator with the electrode mixture layer facing down, placing the coin cell case and a gasket thereon and sealing the cell with a coin cell crimper.

In a stacked laminate cell, use may be made of an electrode assembly obtained by welding a metal tab to, in an electrode where an electrode mixture layer has been formed on part or all of the undercoat layer surface, a region of the electrode where the undercoat layer has been formed and the electrode mixture layer has not been formed (welding region). In this case, the electrodes making up the electrode assembly may each be composed of a single plate or a plurality of plates, although a plurality of plates are generally used in both the positive and negative electrodes. The plurality of electrode plates used to form the positive electrode are preferably stacked in alternation one plate at a time with the plurality of electrode plates used to form the negative electrode. It is preferable at this time to interpose the above-described separator between the positive electrode and the negative electrode. In cases where welding is carried out at a region where an undercoat layer is formed and an electrode mixture layer is not formed, the coating weight of the undercoat layer per side of the current collector is set to preferably 100 mg/m² or less, more preferably 90 mg/m² or less, and even more preferably 50 mg/m² or less.

A metal tab may be welded at a welding region on the outermost electrode plate of the plurality of electrode plates, or a metal tab may be sandwiched and welded between the welding regions on any two adjoining electrode plates of the plurality of electrode plates. The metal tab material is not particularly limited, provided it is one that is commonly used in energy storage devices. Examples include metals such as nickel, aluminum, titanium and copper; and alloys such as stainless steel, nickel alloys, aluminum alloys, titanium alloys and copper alloys. Of these, from the standpoint of the welding efficiency, it is preferable for the tab material to include at least one metal selected from aluminum, copper and nickel. The metal tab is preferably in the form of a foil and has a thickness that is preferably from about 0.05 mm to about 1 mm.

Known methods for welding together metals may be used as the welding method. Examples include TIG welding, spot welding, laser welding and ultrasonic welding. Joining together the electrode and the metal tab by ultrasonic welding is preferred.

Ultrasonic welding methods are exemplified by a technique in which a plurality of electrode plates are placed between an anvil and a horn, the metal tab is placed at the welding region, and welding is carried out collectively by the application of ultrasonic energy; and a technique in which the electrode plates are first welded together, following which the metal tab is welded.

In this invention, with either of these methods, not only are the metal tab and the electrodes welded together at the welding region, the plurality of electrode plates are ultrasonically welded to one another. The pressure, frequency, output power, treatment time, etc. during welding are not particularly limited, and may be suitably set while taking into account, for example, the material used and the coating weight of the undercoat layer.

A laminate cell can be obtained by placing the electrode assembly produced as described above within a laminate pack, injecting the electrolyte solution described above, and subsequently heat sealing.

### EXAMPLES

Preparation Examples, Production Examples, Examples and Comparative Examples are given below to more fully illustrate the invention, although the invention is not limited by these Examples. The apparatuses used were as follows.

| | |
|---|---|
| • Probe-type ultrasonicator: | UIP1000, from Hielscher Ultrasonics GmbH |
| • Wire bar coater: | PM-9050MC, from SMT Co., Ltd. |
| • Homogenizing disperser: | T.K. Robomix (Homogenizing Disperser model 2.5 (32 mm dia.)), from Primix Corporation |
| • Thin-film spin-type high-speed mixer: | Filmix model 40, from Primix Corporation |
| • Planetary centrifugal mixer: | Thinky Mixer ARE-310, from Thinky |
| • Roll press: | SA-602, from Takumi Giken |
| • Charge/discharge measurement system: | TOSCAT 3100, from Toyo System Co., Ltd. |
| • Adhesion/Film peel analyzer: | VERSATILE PEEL ANALYZER, from Kyowa Interface Science, Inc. |

### [1] Preparation of Undercoat Composition

### [Preparation Example 1]

The cationic polymer Epomin P-1000 (from Nippon Shokubai Co., Ltd.; solids concentration, 30 wt%; monomer composition: ethyleneimine) in an amount of 4.19 g as the dispersant was mixed together with 44.56 g of pure water, following which 1.25 g of the conductive carbon material TC-2010 (carbon nanotubes available from Toda Kogyo Corporation) was mixed therein. The resulting mixture was sonicated for 10 minutes at 500 W using a probe-type ultrasonicator, thereby giving Undercoat Composition A (a uniform CNT dispersion).

### [Preparation Example 2]

Aside from using Denka Black (Denka Co., Ltd.) as the conductive carbon material, Undercoat Composition B (a uniform CNT dispersion) was prepared in the same way as in Preparation Example 1.

### [Preparation Example 3]

Aside from using 1.25 g of the cationic polymer Unisence KHP10P (from Senka Corporation; solids concentration, 99 wt%; monomer composition: dicyandiamide/diethylenetriamine) as the dispersant and setting the amount of pure water added to 47.5 g, Undercoat Composition C (a uniform CNT dispersion) was prepared in the same way as in Preparation Example 1.

### [Comparative Preparation Example 1]

Aside from using 5.0 g of the oxazoline polymer-containing aqueous solution Epocros® WS-700 (Nippon Shokubai Co., Ltd.; solids concentration, 25 wt%) as the dispersant and setting the amount of pure water added to 43.75 g, Undercoat Composition D (a uniform CNT dispersion) was prepared in the same way as in Preparation Example 1.

### [Comparative Preparation Example 2]

Aside from using Denka Black (Denka Co., Ltd.) as the conductive carbon material, Undercoat Composition E (a uniform CNT dispersion) was prepared in the same way as in Preparation Example 1.

### [Comparative Preparation Example 3]

Aside from using 12.5 g of the oxazoline polymer-containing aqueous solution Epocros® WS-300 (Nippon Shokubai Co., Ltd.; solids concentration, 10 wt%) as the dispersant and setting the amount of pure water added to 36.25 g, Undercoat Composition F (a uniform CNT dispersion) was prepared in the same way as in Preparation Example 1.

### [Comparative Preparation Example 4]

Aside from using 1.25 g of the neutral polymer polyvinyl alcohol (JF-17, from Japan Vam & Poval Co., Ltd.; solids concentration, 98.5 wt%) as the dispersant and setting the amount of pure water added to 47.5 g, Undercoat Composition G (a uniform CNT dispersion) was prepared in the same way as in Preparation Example 1.

### [Comparative Preparation Example 5]

Aside from using 1.25 g of the neutral polymer polyvinyl alcohol (JN-18, from Japan Vam & Poval Co., Ltd.; solids concentration, 98.5 wt%) as the dispersant and setting the amount of pure water added to 47.5 g, Undercoat Composition H (a uniform CNT dispersion) was prepared in the same way as in Preparation Example 1.

### [2] Production of Undercoat Foil

### [Production Example 1]

Undercoat Composition A was uniformly spread with a wiper coater (OSP-13, wet film thickness, 3 µm) onto copper foil (thickness, 15 µm) as the current collector and then dried at 110°C for 20 minutes so as to form an undercoat layer, thereby producing Undercoat Foil A. The coating weight was measured and found to be 133 mg/m².

### [Production Example 2]

Aside from using Undercoat Composition B instead of Undercoat Composition A, Undercoat Foil B was produced in the same way as in Production Example 1. The coating weight was measured and found to be 156 mg/m².

### [Production Example 3]

Aside from using Undercoat Composition C instead of Undercoat Composition A, Undercoat Foil C was produced in the same way as in Production Example 1. The coating weight was measured and found to be 145 mg/m².

### [Comparative Production Example 1]

Aside from using Undercoat Composition D instead of Undercoat Composition A, Undercoat Foil D was produced in the same way as in Production Example 1. The coating weight was measured and found to be 141 mg/m².

### [Comparative Production Example 2]

Aside from using Undercoat Composition E instead of Undercoat Composition A, Undercoat Foil E was produced in the same way as in Production Example 1. The coating weight was measured and found to be 136 mg/m².

### [Comparative Production Example 3]

Aside from using Undercoat Composition F instead of Undercoat Composition A, Undercoat Foil F was produced in the same way as in Production Example 1. The coating weight was measured and found to be 129 mg/m².

### [Comparative Production Example 4]

Aside from using Undercoat Composition G instead of Undercoat Composition A, Undercoat Foil G was produced in the same way as in Production Example 1. The coating weight was measured and found to be 97 mg/m².

### [Comparative Production Example 5]

Aside from using Undercoat Composition H instead of Undercoat Composition A, Undercoat Foil H was produced in the same way as in Production Example 1. The coating weight was measured and found to be 86 mg/m².

### [3] Production of Electrode

### [Example 1]

The following were mixed together in a homogenizing disperser at 3,000 rpm for 5 minutes: 16.37 g of a silicon-carbon composite material (SiC, from ITRI) as the active material, 11.23 g of an aqueous solution (14.9 wt%) of LA-132 (Union Chemical Ind. Co.) as an anionic functional group-containing binder, 0.19 g of super-P (TIMCAL Graphite & Carbon) and 0.37 g of VGCF (Showa Denko K.K.) as the conductive materials and 31.84 g of water. Next, using the thin-film spin-type high-speed mixer, mixing treatment was carried out for 60 seconds at a peripheral speed of 20 m/s, in addition to which deaeration was carried out for 2 minutes at 1,000 rpm with the planetary centrifugal mixer, thereby producing an electrode slurry (solids concentration, 31 wt %; SiC : LA-132 : super-P : VGCF = 88 : 9 : 1 : 2 (weight ratio)). The resulting electrode slurry was uniformly spread (wet film thickness, 75 µm) onto Undercoat Foil A, following which the slurry was dried at 80°C for 30 minutes and then at 120°C for 30 minutes, thereby forming an electrode mixture layer on the undercoat layer. Compression bonding was then carried out by pressing with the roll press under a pressing force of 2 kN/cm, thereby producing Electrode A.

### [Example 2]

Aside from using Undercoat Foil B instead of Undercoat Foil A, Electrode B was produced in the same way as in Example 1.

### [Example 3]

Aside from using Undercoat Foil C instead of Undercoat Foil A, Electrode C was produced in the same way as in Example 1.

### [Comparative Example 1]

Aside from using Undercoat Foil D instead of Undercoat Foil A, Electrode D was produced in the same way as in Example 1.

### [Comparative Example 2]

Aside from using Undercoat Foil E instead of Undercoat Foil A, Electrode E was produced in the same way as in Example 1.

### [Comparative Example 3]

Aside from using Undercoat Foil F instead of Undercoat Foil A, Electrode F was produced in the same way as in Example 1.

### [Comparative Example 4]

Aside from using Undercoat Foil G instead of Undercoat Foil A, Electrode G was produced in the same way as in Example 1.

### [Comparative Example 5]

Aside from using Undercoat Foil H instead of Undercoat Foil A, Electrode H was produced in the same way as in Example 1.

### [Comparative Example 6]

Aside from using plain aluminum foil instead of Undercoat Foil A, Electrode I was produced in the same way as in Example 1.

### [3] Evaluation of Electrode Adhesion

The electrodes obtained in the respective Examples and Comparative Examples were each cut to a width of 25 mm, a 20 mm-wide double-sided tape was attached to the electrode mixture layer-coated side of the electrode, and the electrode was fastened onto a glass substrate. This was set in the adhesion/film peel analyzer, a peel test was carried out at a peel angle of 90° and a peel rate of 100 mm/min, and the bond strength was measured. The results are shown in Table 1.

**[Table 1]**

| | Electrode | Conductive carbon material | Dispersant | Bond strength (N/cm) |
|---|---|---|---|---|
| Example 1 | A | TC-2010 | Epomin | 2.720 |
| Example 2 | B | Denka Black | Epomin | 2.988 |
| Example 3 | C | TC-2010 | KHP10P | 2.532 |
| Comparative Example 1 | D | TC-2010 | WS-700 | 1.827 |
| Comparative Example 2 | E | Denka Black | WS-700 | 1.997 |
| Comparative Example 3 | F | TC-2010 | WS-300 | 2.351 |
| Comparative Example 4 | G | TC-2010 | JF-17 | 2.251 |
| Comparative Example 5 | H | TC-2010 | JF-18 | 2.260 |
| Comparative Example 6 | I | - | - | 2.003 |

It is apparent from the results shown in Table 1 that the electrodes of the invention have an excellent bond strength with the current collector and the electrode mixture layer.

### REFERENCE SIGNS LIST

- 1: Parallel area
- 2: Tube outer diameter at parallel area
- 3: Constricted area
- 4: Tube outer diameter at constricted area

## Claims

1. An energy storage device electrode comprising a current collector, a conductive carbon material and cationic dispersant-containing undercoat layer formed on at least one side of the current collector, and an electrode mixture layer formed on the undercoat layer.

2. The energy storage device electrode of claim 1, wherein the conductive carbon material includes carbon nanotubes.

3. The energy storage device electrode of claim 1 or 2, wherein the electrode mixture layer includes a compound having an anionic functional group.

4. The energy storage device electrode of any one of claims 1 to 3, wherein the cationic dispersant includes at least one selected from the group consisting of cationic polymers obtained using dicyandiamide as the monomer, cationic polymers obtained using diethylenetriamine as the monomer, cationic polymers obtained using dicyandiamide and diethylenetriamine as the monomers, and cationic polymers obtained using ethyleneimine as the monomer.

5. The energy storage device electrode of claim 4, wherein the cationic dispersant is a cationic polymer obtained using ethyleneimine as the monomer.

6. The energy storage device electrode of claim 4, wherein the cationic dispersant is a cationic polymer obtained using dicyandiamide as the monomer.

7. The energy storage device electrode of claim 4, wherein the cationic dispersant is a cationic polymer obtained using diethylenetriamine as the monomer.

8. The energy storage device electrode of claim 4, wherein the cationic dispersant is a cationic polymer obtained using dicyandiamide and diethylenetriamine as the monomers.

9. The energy storage device electrode of any one of claims 1 to 8, wherein the coating weight of the undercoat layer per side of the current collector is 1,000 mg/m² or less.

10. The energy storage device electrode of claim 9, wherein the coating weight of the undercoat layer per side of the current collector is 500 mg/m² or less.

11. The energy storage device electrode of claim 10, wherein the coating weight of the undercoat layer per side of the current collector is 300 mg/m² or less.

12. The energy storage device electrode of any one of claims 1 to 11, wherein the current collector is copper foil or aluminum foil.

13. An energy storage device comprising the energy storage device electrode of any one of claims 1 to 12.
